# EUROPEAN PATENT APPLICATION

(11) **EP 3 699 021 A1**
(43) Date of publication of application: **26.08.2020**
(21) Application number: 19159178.3
(22) Date of filing: 25.02.2019
(51) Int. Cl.: B60L 53/14, B60L 53/30, B60L 53/67, B60L 53/62, B60L 53/60

(54) **SYSTEM FOR DESTINATION CHARGING OF ELECTRIC VEHICLES**

(71) Applicant: Överås Invest AB, 41266 Göteborg (SE)
(72) Inventor: SANDAHL, Kristian, 412 66 Göteborg (SE)
(74) Representative: AWA Sweden AB

(57) **Abstract**

A system for AC charging of electrical vehicles, comprising a central charging unit (213) including an AC power supply (20), a plurality of electrical vehicle (EV) controllers (17), a switching arrangement (218) for connecting a selected one of a plurality of charging outlets to one of said EV controllers (17) and to said AC power supply, to thereby enable charging a vehicle using the selected charging outlet (11), and a master controller (19) for controlling said switching arrangement (218) in dependence of a set of parameters, including the expected time of occupancy of a specific parking spot by an electrical vehicle connected to the outlet of the specific parking spot (12).

With this arrangement, a limited number of electrical vehicle (EV) controllers can provide electrical vehicle charging capabilities at a larger number of parking spots.

## Description

### Field of the invention

The present invention relates to charging of electric vehicles or hybrid vehicles, and more specifically to AC charging, i.e. using the normal AC mains to charge the vehicle.

### Background of the invention

Charging of electrical vehicles can be divided into two different categories.

First, there is AC charging using the readily available mains voltage, e.g. 220/230 VAC single phase or 380/400 VAC three phase. The AC voltage is converted into DC by a rectifier in the vehicle battery charger.

The most typical example is charging at the home of the vehicle owner, in which case the power of the charging is limited by the maximum power (current) of the mains connection of the home. A typical connection is limited to 16 A, three phase, corresponding to 11 kW. There are also customized AC charging stations, typically using a designated mains connection and thus providing a higher power charging. For example, the charging station may have a 32 A, three phase connection, corresponding to 22 kW. Note, however, that the effective power will be restricted by the capacity of the vehicle rectifier.

Even with a designated mains connection, and the most powerful vehicle rectifier, AC charging will typically require a relatively long period of time, and is thus normally takes place at a location where the vehicle is expected to stay for a longer period of time, e.g. at home or at a final destination. Accordingly, high power AC charging is sometimes referred to as "destination charging".

A second category of charging bypasses the built-in vehicle charger, and uses high voltage DC to charge the vehicle. Such charging, often referred to as fast charging, makes it possible to charge the vehicle in a short period of time, and is therefore useful when charging along the road.

The advantage of bypassing the built-in vehicle battery charger, and thus avoiding the power limitations of its rectifier, comes at the cost of providing the charging station with a powerful rectifier (AC/DC power converter). This rectifier converts the AC mains (e.g. 380 VAC three phase) into DC voltage (e.g. 500 VDC), and may be able to handle a power of several hundred kW. As such high power charging stations are complex and cost intensive, they are often shared by several power dispensers. Examples of such fast charging systems are disclosed e.g. in US2017/0274792 and US2015/0165917.

While the relatively high cost of fast charging stations is motivated when there is limited time available for charging, AC charging remains the logical choice when the vehicle remains in the same place for a longer period of time. As mentioned, such locations includes the home and workplace of the vehicle owner, but also other places in society, e.g. parking garages.

To enable AC charging at such locations, there are AC charging boxes available on the market which can be installed and connected directly to the mains. An owner of an electrical vehicle will typically purchase such a box for their home, and several such boxes are often installed outside workplaces, shopping malls, etc. The box essentially includes a power breaker and control circuitry for controlling the power breaker based on the status of the battery charger in the vehicle.

However, following the increase in numbers of electrical vehicles, it is sometimes considered desirable to equip a large number of parking spots, e.g. in a parking garage, with charging boxes. On the other hand, a majority of cars are still not electrical, and thus at any given time, most of the charging boxes will be unused, making such an arrangement cost inefficient. Further, if a large number of charging boxes are connected to the same mains supply, their combined power will typically exceed the maximum power (maximum current) of that mains supply. Therefore, some kind of load management system will be implemented, to ensure that not too many charging boxes are in use simultaneously.

### General disclosure of the invention

It is an object of the present invention to mitigate the above mention problems, and provide an arrangement for AC charging which is more cost efficient and also eliminates the need for complex load management systems.

According to an aspect of the present invention, this and other objects are achieved by a system for AC charging of electrical vehicles, comprising a central charging unit including an AC power supply, a plurality of electrical vehicle (EV) controllers, a switching arrangement for connecting a selected one of a plurality of charging outlets to one of the EV controllers and to the AC power supply, to thereby enable charging a vehicle using the selected charging outlet, and a master controller for controlling the switching arrangement in dependence of a set of parameters, including the expected time of occupancy of a specific parking spot by an electrical vehicle connected to the outlet of the specific parking spot.

With this arrangement, a limited number of electrical vehicle (EV) controllers can provide electrical vehicle charging capabilities at a larger number of parking spots, thus significantly reducing cost. As an example, nine EV controllers may provide charging capabilities at more than 50, or even more than 100, charging outlets. The master controller ensures adequate activation of selected outlets based on expected time of occupancy.

It is noted that the expression "electrical vehicle" includes any vehicle that has an on-board battery for enabling electrical drive. The vehicle can be a pure electrical vehicle, adapted for electrical drive only, or a so-called hybrid vehicle, adapted for electrical drive as well as other fuel-based drive (e.g. by including a gasoline or diesel engine). The vehicle may be autonomous or semi-autonomous.

The invention is based on the realization that when a large number of electrical vehicles remain in the same place (e.g. in a parking garage) for a long period of time (e.g. several days, or even weeks), they will only need charging for a small portion of this time. Therefore, with adequate time management of the charging based on expected time of occupancy, a small number of EV controllers can provide satisfactory charging to a large number of charging outlets.

In other words, with knowledge about how long each vehicle will remain in the parking spot, the master controller can adaptively activate appropriate charging outlets to ensure that each vehicle is charged during its parking time. The amount of charge will depend on the time in the parking spot, the number of simultaneously connected electrical vehicles, and of course the number of EV controllers in the central charging unit. A specific charging outlet may be activated during one single, consecutive period, or during several shorter periods, distributed over time.

Another relevant factor is the state of charge (SOC) and/or state of health (SOH) of the vehicle battery, which may be provided via the signal control line from the vehicle controller. With such information, the master controller can ensure that at least a significant part of the total charge time is allocated shortly before a vehicle is planned to depart. This ensures that the battery is warm at the time of departure, thus improving battery performance.

Another significant advantage with the invention is that even though charging is made available at a large number of parking spots, the mains connection will only need to be dimensioned to the number of electrical vehicle controllers. This eliminates the need for a specific load management system.

Information about the expected time that the vehicle will occupy the parking spot may be obtained in various ways. Most obviously, it can be obtained directly from the driver who typically has a qualified guess regarding how long they intend to stay at the destination. An indication about expected time in the parking spot can be communicated from the driver of the vehicle, using a dedicated interface, e.g. a simple keypad, associated with the charging outlet. (It is noted that the expression "driver" is here intended to include also a user or occupant of an autonomous vehicle.)

When the destination is a parking garage with pre-booked or pre-paid parking spaces, such as is typically the case e.g. at air-ports, even more specific information will be available from the parking system itself. Such information about pre-paid parking time can be communicated from the parking system to the charging system. The charging system can then associate the parking time information with the correct vehicle ID obtained from the vehicle charger.

The plurality of charging outlets may form part of the system, and each outlet may be arranged in the vicinity of a parking spot and be connectable to the AC power supply (20) via said switching arrangement

Each charging outlet is preferably connected to the switching arrangement with a separate signal line, such that the central charging unit can directly access each outlet.

In one embodiment, a specific charging outlet is connectable to one and only one EV controller. This simplifies design of the switching arrangement.

Alternatively, each charging outlet is connectable to several different EV controllers. This makes the system more flexible, and improves chances of securing satisfactory charging of all electrical vehicles in a facility. The increased flexibility also allows for the master controller to ensure power balancing (equal power load of each phase of a three-phase power supply).

In some embodiments, the switching arrangement is configured to connect the selected charging outlet to a separate AC power supply line, optionally provided with a separate ground fault circuit interrupter.

In other embodiments, the switching arrangement is configured to connect the selected charging outlet to a common AC power rail, optionally provided with a common ground fault circuit interrupter. By using a common power rail, the power switching can be made more flexible, as any group of charging outlets can be connected to the power rail at the same time.

For this purpose, the system may comprise a set of power switches, preferably arranged in the central charging unit, each power switch arranged to connect one of said charging outlets to the AC power rail via a separate power line. This solution provides a centralized topology which achieves a high degree of flexibility. Preferably, each such power switch is configured to allow selective connection of one phase of a three phase power rail.

A second aspect of the invention relates to a method for AC-charging an electrical vehicle parked in a parking spot and connected to one of a plurality of charging outlets, using a central charging unit including a plurality of electrical vehicle controllers, an AC power supply, and a switching arrangement for connecting a selected charging outlet to one of said EV controllers and to said AC power supply, to thereby enable charging a vehicle using the selected charging outlet, the method comprising acquiring an expected time of occupancy of the parking spot by the vehicle, and in dependence of the acquired expected time of occupancy, controlling the switching arrangement to selectively connect the charging outlet to which the vehicle is connected to one of said plurality of EV controllers and to the AC power supply, to thereby enable charging of the vehicle during at least a portion of the time of occupancy.

### Brief description of the drawings

The present invention will be described in more detail with reference to the appended drawings, showing currently preferred embodiments of the invention.
Figure 1 shows a conventional charging station.
Figure 2 shows a vehicle charging system according to a first embodiment of the present invention.
Figure 3 shows a vehicle charging system according to a second embodiment of the present invention.
Figure 4 shows a vehicle charging system according to a third embodiment of the present invention.
Figure 5 shows an example of a power switch in figure 4.
Figure 6 is a flow chart of a method according to an embodiment of the invention.

### Detailed description of preferred embodiments

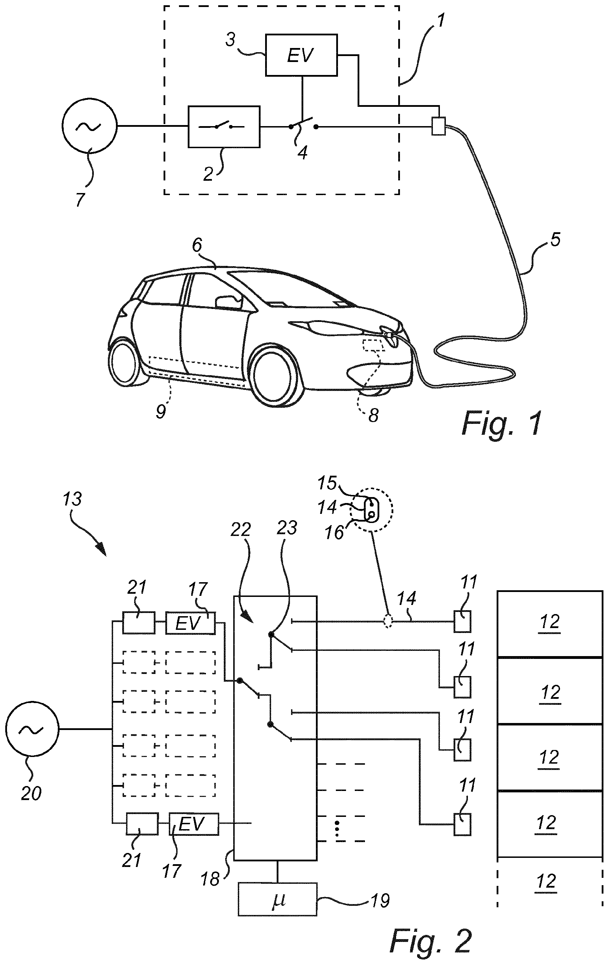

As illustrated in figure 1, a conventional AC destination charging station 1 includes a ground fault circuit interrupter 2, an electric vehicle (EV) controller 3, and an AC power switch 4. The charging station 1 is connected to a vehicle with a charging cable 5, which includes a power line and a control line. During charging, the EV controller 3 closes the power switch 4 to connect the vehicle 6 to the AC mains 7, and provides adequate control signals to the vehicle charger 8 to enable charging of the vehicle battery 9.

Turning now to figure 2, a first embodiment of the present invention is illustrated.

The system includes a plurality of charging outlets 11, each arranged in the vicinity of a parking spot 12, and a central control unit 13. Each charging outlet 11 is here connected to the central unit 13 by means of a cable 14 including a signal line 15 and a (single phase and/or three phase) power line 16. The central charging unit 13 includes a set of electrical vehicle (EV) controllers 17, a switching arrangement 18 for connecting one of the charging outlets 11 to one of the EV controllers 17, and a master controller 19 for controlling the switching arrangement 18. The master controller 19 may be a programmable microcontroller (MCU) associated with memory storing appropriate program code. The master controller 19 may also include more complex circuitry including dedicated hardware and software components.

As discussed above, the present invention relates generally to a charging system where available power from a mains power supply is distributed to a number of active charging outlets among a larger number of charging outlets.

The maximum number of simultaneously active charging outlets 11 will be determined by the number of EV controllers 17 in the central control unit. The number of EV controllers will depend on available power and how this power is distributed among the active charging outlets.

For example, if the available power is a 63 A, 400 V three-phase mains connection, this is sufficient to power nine (three per phase) 16 A, 230 V single phase charging outlets (3.3 kW). Depending on the configuration of vehicle chargers, the available power may also power six 32 A, 230 V single-phase charging outlets (7.4 kW), three 16 A 400V three-phase charging outlets (11 kW), two 32 A, 400 V three-phase charging outlets (22 kW) or one single 63 A, 400 V three-phase charging outlet (43 kW). Or any possible combination thereof.

The choice of possible distribution alternatives will determined the adequate number of EV controllers 17. However, it is most likely preferable to include as many EV controllers 17 as can be used simultaneously to deliver the lowest charging power conventionally used (i.e. 3.3 kW at the time of the invention). So, in the case of a 63 A, 400 V three phase mains power connection, the system may include nine EV controllers 17.

The total number of charging outlets 11 can be significantly greater than the number of EV controllers 17. However, again, with nine EV controllers 17, only nine of the charging outlets can be active simultaneously. If more than nine vehicles are connected to charging outlets 11, the master controller 19 will control the switching arrangement 18 to selectively activate nine charging outlets at a time. Which charging outlets that are activated at any given time will be determined by information relative to the expected time of occupancy of each particular vehicle.

In the embodiment in figure 2, the switching arrangement 18 serves to connect one pair of signal line 15 and power line 16 to one of the EV controllers 17. Each EV controller 17 is configured to provide the required control signals as well as the required electrical power. For this purpose, each EV controller 17 is connected to a the mains power supply 20 via a ground fault circuit interrupter 21.

In figure 2, the switching arrangement 18 is realized by a set of switching trees 22, one for each EV controller 17, allowing each EV controller 17 to be connected to two, four, eight, etc. different charging outlets. In the illustrated example, a switching tree 22 with three switches 23 allows connection of one EV controller to any one of four charging outlets 11. In practice, although not shown in figure 2, each EV controller will be connected to two separate switching trees, one for control signals and one for power. While the power switching typically requires power breakers (as illustrated schematically in figure 2) the control signals are typically low power, low voltage, and may be connected using appropriate logic circuits.

With this approach, the number of charging outlets will be a multiple 2ⁿ (2, 4, 8, etc) of the number of EV controllers 17, where n is the number of switching levels in the switching tree 22. In the concrete example mentioned above, with nine EV controllers 17, these can be connectable to 72 charging outlets 11 by having a switching tree 22 with three levels of switches 23 (9x2³=72). A consequence of this approach is that each charging outlet 11 is always connected to the same EV controller 17 when activated.

It is noted that all charging outlets 11 (operating in single phase) in figure 2 can only be active if an equal number of charging outlets are connected to each one of the three phases. Also if only a subset of the charging outlets are in use, it is desirable to have as equal loading of the three phases as possible (phase balancing).

In the embodiment in figure 2, phase balancing can be promoted by ensuring that an equal number of EV controllers (in single phase operation) are connected to each phase. This means that if all EV controllers are operated in single phase mode simultaneously, phase balancing is guaranteed. However, as each charging outlet in figure 2 is connected only to one EV controller, phase balancing is not guaranteed if only a few charging outlets are active. For example, three active charging outlets 11 may all be connected to EV controllers 17 connected to the same phase.

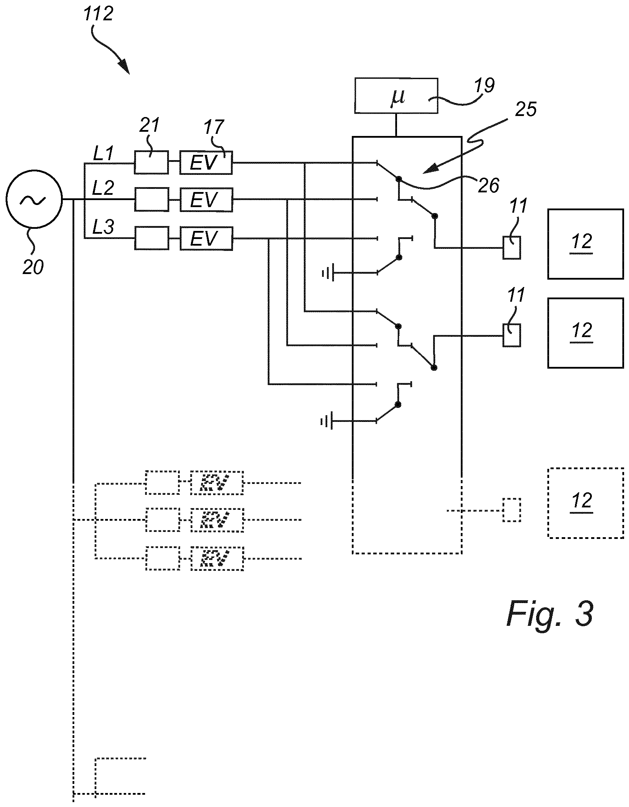

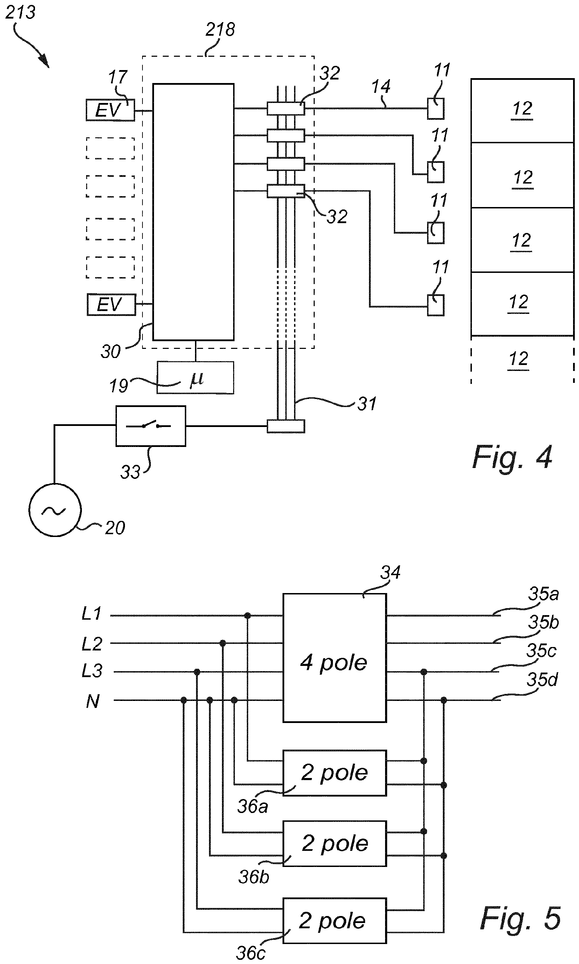

To ensure phase balancing, a more flexible switching arrangement must be provided, such that any charging outlet can be connected to any one of the EV controllers and consequently to any phase. With such a flexible switching arrangement in figure 2, phase balancing can be achieved by the master controller in the process of activating charging outlets. Examples of more flexible switching arrangements are provided by the embodiments in figures 3 and 4.

In the embodiment illustrated in figure 3, the switching arrangement 118 includes one switching tree 25 provided for each charging outlet 11, such that a specific charging outlet 11 is connectable to one of several EV controllers 17, or to ground when it is inactive. In the illustrated example, a group of outlets 11 (only two of them are illustrated for simplicity) are connectable to one of three EV controllers (each connected to one phase, L1, L2 or L3). The switching tree 25 thus here includes two levels of switches 26, providing 2²=4 possible connections.

Compared to the charging unit 13 in figure 2, the charging unit 113 in figure 3 allows a more flexible charging, where each charging outlet 11 can be connected to more than one different EV controller 17 (three in the illustrated example). The increased flexibility comes at the cost of a greater number of switches 26.

Taking the example above, with a total of nine EV controllers 11, these may be divided into three sets of three EV controllers, where each set is connectable to a group of e.g. 24 charging outlets. It is of course possible to increase flexibility even further by including even more switches 26 and thus increasing the size of the switching tree 25.

In addition to being more flexible, the solution in figure 3 also improves the issue of phase balancing, as each outlet 11 can be connected to any one of the three phases. The master controller 19 may here be programmed to control the switching arrangement 18 to ensure power balancing. In most cases, power balancing can be ensured by simply connecting a charging outlet 11 to an available EV controller 17 connected to one of the least loaded phases. However, in some cases, if only one EV controller 17 connectable to a particular charging outlet 11 is available, the power balancing may entail also reconnecting previously connected EV controllers 17.

Figure 4 shows an even more flexible embodiment of a central charging unit 213, where the switching arrangement 218 includes logic circuitry 30 and a set of power switches 32, each one arranged to connect one of the charging outlets 11 to one common three phase power rail 31. The power rail 31 is connected to the power mains 20 via a ground fault circuit interrupter 33.

Here, the logic circuitry 30 is configured to connect the signal line 15 of a selected charging outlet 11 to an EV controller 17, and to connect the power line 16 of the selected charging outlet 11 to the power rail 31 by closing the associated power switch 32. Connection of control signal and power is thus made independent of each other. The logic circuitry 30 only handles low voltage signals, and can address the power switches independently of each other. In figure 4, any EV controller 17 can thus be connected to any charging outlet 11.

The power switches 32 are preferably configured to allow three-phase connection as well as single-phase connection, to allow also three-phase charging when supported by the vehicle charger 8. Further, to allow phase balancing, the power switches 32 are preferably capable of connecting a charging outlet to one selected phase of the three phases.

With reference to figure 5, such a "phase selective" power switch 32 will be described. The switch here comprises a four pole breaker 34 to allow connection of four lines 35a, 35b, 35c, 35d to the three phases L1, L2, L3 and N (neutral), respectively. Further, the switch comprises a set of three two-pole breakers 36a, 36b, 36c. Closing one of the breakers 36a, 36b, 36c will connect the line 35c to a selected one of the phase L1, L2, L3, and the line 35d to N. In this case, lines 35a and 35b will be disconnected.

The choice of three phase or single phase connection will be governed by the active EV controller 17, which receives information about the vehicle charger 8 from the vehicle. When single-phase charging is used, the choice of phase (L1, L2 or L3) can be handled by the master controller 19 to ensure phase balancing.

As mentioned, the master controller 19 in figures 2 - 4 will control the switching arrangement 18, 118, 218 to selectively activate charging outlets 11 to which vehicles are connected. The selective activation is governed by a set of parameters, including the expected time of occupancy of a specific parking spot 12 by an electrical vehicle connected to the outlet of the specific parking spot 12. Such information can be obtained in various ways, including manual entry of a user when parking in a spot 12 (using a wireless device (e.g. a mobile phone app) or a physical interface associated with the charging outlet 11), or by accessing information about prepaid parking in a parking garage information system.

The master controller 19 may also schedule activation of individual charging outlets such that the charging is completed shortly before an expected time of departure. This is beneficial, as the battery will then be heated, leading to better battery performance. Such scheduling requires information about state of charge of the battery as well as an estimated time of departure.

A critical aspect of any electrical charging system is to measure (meter) the electrical power provided to an individual user (here vehicle). For this reasons, each EV controller 17 is preferable equipped with an electrical meter (not shown) capable of measuring the poser delivered to the vehicle currently connected to the EV controller 17. Alternatively, an electrical meter is provided externally to the EV controller.

Regardless of where the electrical meter is provided, the master controller 19 is configured to monitor the electrical power measured by the electrical meters, in order to determine the amount of electrical power provided to a particular charging outlet 11 (and thus to the vehicle connected to this outlet). This information will ultimately be needed to effect payment for this electrical power, using payment details provided by a user. Such payment details may be provided in various ways, including manual entry of a user when parking in a spot 12 (using a wireless device (e.g. a mobile phone app) or a card reader associated with the charging outlet 11), or by accessing parking payment information already available in a parking garage information system.

It is noted that a user may provide additional preferences to even further enhance the functionality of the system. For example, a user may indicate a maximum price per power unit, resulting in that the vehicle can only be charged during off-peak hours, e.g. during night. Another example could be that a user indicates high priority charging, e.g. in the event of a short parking duration. Such high priority might come at a higher price per power unit.

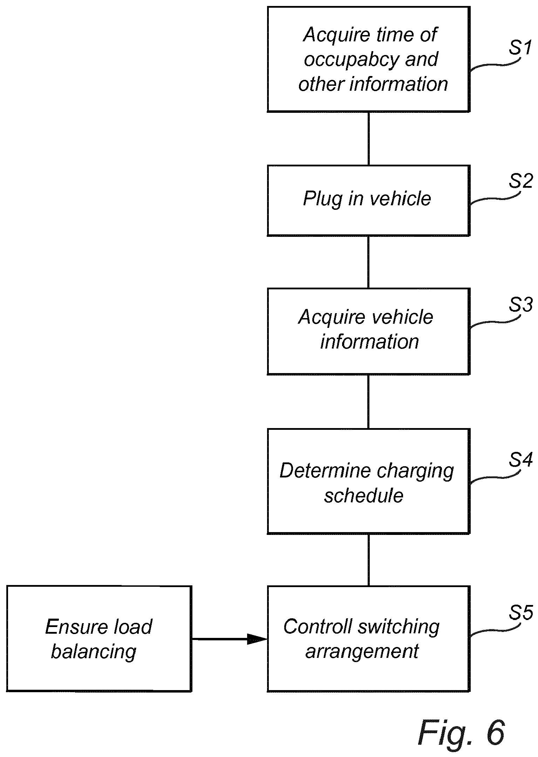

A method of charging an electrical vehicle according to an embodiment of the invention will now be described with reference to figure 6.

First, in step S1, an expected time of occupancy, and any other required information such as payment details, requested charging cost, etc, is acquired from the user. Then, in step S2, the vehicle is parked in a parking spot 12 and plugged in to the charging outlet 11. (Of course, the vehicle may be parked before the information is acquired in step S1.) In step S3, additional relevant information may be acquired from the on-board charging unit 8, including e.g. state of charge and state of health of the battery 9. The master controller 19 then determines (step S4) an adequate charging schedule, based on the information acquired in steps S1 and S3, in particular the time of occupancy. The charging schedule indicates during what time periods the charging outlet 11 should be activated, in order to ensure the desired charging. In step S5, the master controller 19 controls the switching arrangement 18 (or 118 or 218) to connect the charging outlet 11 to one of the EV controllers 17 in the central unit 13 (or 113 or 213) in accordance with the determined charging schedule.

If possible, e.g. when the charging system is designed as shown in figures 3 or 4, the master controller 19 in step S5 also ensures (as far as possible) load balancing of the AC power supply 20. Such load balancing may entail an appropriate choice of AC phase each time the charging outlet 11 is activated. It may also entail a reconnection of an already activated charging outlet, in a situation where the set of plugged in vehicles changes unexpectedly. (For example, if one or several vehicles are unplugged from the system before the expiration of their expected time of duration, so that the determined charging schedule cannot be effected.)

The person skilled in the art realizes that the present invention by no means is limited to the preferred embodiments described above. On the contrary, many modifications and variations are possible within the scope of the appended claims. For example, the switching arrangement may be realized in many different ways, still complying with the inventive concept as defined by the claims. Further, the specific examples regarding voltage levels, current levels, power levels, number of EV controllers, number of charging outlets, etc., are only examples, and should not be construed as limiting the scope of the invention.

## Claims

1. A system for AC charging of electrical vehicles, comprising a central charging unit (13; 113; 213) including:
an AC power supply,
a plurality of electrical vehicle (EV) controllers (17),
a switching arrangement (18; 18') for connecting a selected one of a plurality of charging outlets to one of said EV controllers (17) and to said AC power supply, to thereby enable charging a vehicle using the selected charging outlet (11), and
a master controller (19) for controlling said switching arrangement (18; 18') in dependence of a set of parameters, including the expected time of occupancy of a specific parking spot by an electrical vehicle connected to the outlet of the specific parking spot (12).

2. The system in claim 1, further comprising a plurality of charging outlets (11), each outlet arranged in the vicinity of a parking spot (12), each charging outlet being connectable to said AC power supply (20) via said switching arrangement (18; 18').

3. The system according to claim 2, wherein each charging outlet (11) is connected to the central charging unit (18; 118; 218) by means of a separate signal line (14).

4. The system in any one of claims 1 - 3, wherein a specific charging outlet is connectable to only one EV controller (17).

5. The system in any one of claims 1 - 3, wherein a specific charging outlet is connectable to a set of several EV controllers (17).

6. The system according to any one of the preceding claims, wherein said switching arrangement (18; 118) is configured to connect the selected charging outlet to a separate AC power supply line.

7. The system according to claim 6, wherein each AC power supply line is provided with a separate ground fault circuit interrupter (21).

8. The system according to claim 5, wherein said switching arrangement is configured to connect the selected charging outlets (11) to a common AC power rail (31).

9. The system according to claim 8, wherein the AC power rail (31) is provided with a common ground fault circuit interrupter (33).

10. The system according to claim 8 or 9, comprising a set of power switches (32), each power switch (32) arranged to connect one of said charging outlets (11) to said AC power rail via a separate power line (14).

11. The system according to any one of the preceding claims, wherein the AC power supply (20) is a three phase power supply.

12. The system according to claim 11 when depending on claim 10, wherein each power switch (32) is configured to allow selective connection of one phase of a three phase power supply.

13. A method for AC-charging an electrical vehicle parked in a parking spot (12) and plugged in to one of a plurality of charging outlets (11), using a central charging unit (13; 113; 213) including a plurality of electrical vehicle controllers (17), an AC power supply (20), and a switching arrangement (18; 118; 218) for connecting a selected charging outlet (11) to one of said EV controllers (17) and to said AC power supply (20), to thereby enable charging a vehicle using the selected charging outlet, the method comprising:
acquiring an expected time of occupancy of the parking spot by the vehicle, and
in dependence of the acquired expected time of occupancy, controlling the switching arrangement (18; 118; 218) to selectively connect the charging outlet (11) to which the vehicle is plugged in to one of said plurality of EV controllers (17) and to the AC power supply (20), to thereby enable charging of the vehicle during at least a portion of the time of occupancy.

14. The method of claim 13, wherein the step of controlling the switching arrangement (18; 118; 218) includes connecting and disconnecting the charging outlet (11) to which the vehicle is plugged in to/from one dedicated EV controller (17).

15. The method of claim 14, wherein the step of controlling the switching arrangement (18; 118; 218) includes connecting and disconnecting the charging outlet (11) to which the vehicle is plugged in to/from one of a set of several EV controllers (17).
